Europäisches Patentamt

European Patent Office

Office européen des brevets

(11) Publication number: **0 339 246**

**A1**

(12) **EUROPEAN PATENT APPLICATION**

(21) Application number: **89104794.6**

(22) Date of filing: **17.03.89**

(51) Int. Cl.⁴: **F03B 17/06 , F03B 13/24 , F03B 13/26**

(30) Priority: **26.04.88 GB 8809826**

(43) Date of publication of application:
**02.11.89 Bulletin 89/44**

(84) Designated Contracting States:
**AT BE CH DE ES FR GB GR IT LI LU NL SE**

(71) Applicant: **HYDRO ENERGY ASSOCIATES LIMITED**
**17 Royal Crescent**
**Cheltenham Glos, GL50 3DA(GB)**

(72) Inventor: **Bellamy, Norman West**
**95 St Martin's Road**
**Coventry CV3 6ES(GB)**
Inventor: **Peatfield, Anthony Michael**
**33 Leicester Road**
**Nuneaton, CV11 6AB(GB)**
Inventor: **West, Michael John**
**9 Bell Lane Monks Kirby**
**Rugby CV23 0QY(GB)**
Inventor: **White, Peter Robert Scott**
**23 Spencer Avenue**
**Coventry CV5 6NQ(GB)**
Inventor: **Loughridge, Brian William**
**88 St Martin's Road**
**Coventry CV3 6EU(GB)**
Inventor: **Lockett, Francis Peter**
**1 Finham Green Road**
**Coventry, CV3 6EN(GB)**
Inventor: **Duckers, Leslie John**
**23 Leamington Road**
**Coventry CV3 6GF(GB)**

(74) Representative: **Denmark, James**
**c/o Bailey, Walsh & Co. 5 York Place**
**Leeds LS1 2SD Yorkshire(GB)**

(54) **A method of converting energy in a stream of moving liquid.**

㊗ The present invention comprises a system for converting the energy in a stream of moving liquid such as a river. The stream is diverted by a common and alternating control means into either of two chambers on opposite sides of the stream so that as the stream flows tangentially into one chamber it flows tangentially out of the other chamber into the stream. As the liquid flows into or out of each chamber it swirls so that the hydraulic losses due to inflow into and outflow from the chambers are minimal. The filling and emptying of the chambers causes displacement of air out of one chamber, through a duct and into the other chamber and vice versa. The back and forth movement of the air drives a turbine in the duct, which in turn drives an electrical generator. Performance is improved by causing the stream of flow through a syphon duct structure into which the chambers communicate.

FIG. 2.

## A Method of Converting Energy in a Stream of Moving Liquid

This invention relates to a method of converting the energy in a stream of moving liquid into a more readily useable form. The moving liquid may be the flow in a natural watercourse or a manmade channel or the outflow from a naturally occurring or impounded body of liquid including impounded tidal waters.

Machines commonly in use for extracting energy from a flow of liquid have characteristically low rotational speeds and low efficiency of energy transfer whenever, due to low pressure head, the velocity of liquid entering the machine is low. In these circumstances, the rotational speed of the machine may be too low to effectively generate electricity from a generator connected to it (which is a common arrangement) unless a gearbox be used to increase the rotational speed of the generator. The use of such a gearbox involves additional cost and further loss of energy. Also, under such conditions, the flow can comprise a mixture of air and liquid which can cause excessive wear of and damage to the machine.

It is known to utilize a flexible or rigid bag, container or chamber into which a liquid, such as water, is introduced in order to displace fluid, such as air, within the bag, container or chamber, in order to drive a prime mover, such as a turbine unit. By the use of a suitable turbine, a higher rotational velocity more suited to directly driving a generator or pump may be obtained by a machine placed in the flow of fluid than could be obtained by placing the machine in the flow of liquid which displaced it. By this means, power may efficiently be derived from a stream of liquid of low velocity due to low pressure head which may not at present be efficiently used and where such stream uses an impoundment of liquid less extensive impounding structures are required on account of the low useable head and such structures may take the form of an inflatable bank or dam.

In the known arrangement, as disclosed in U.K. Patent Specification No. 8316020 a method of converting the energy in a stream of moving liquid into a more readily useable form, comprises alternately and by the use of valve means introducing the liquid into a chamber or container to cause the expulsion of fluid therefrom, and allowing the liquid to leave the chamber or container to cause induction of fluid into the chamber, or container, providing an electrical generator or pump of a designed rotational speed of operation, using a rotationally turning turbine unit which is driven by the said fluid as a result of said expulsion and induction at a speed which is matched to the designed rotational speed of operation of the pump or generator, and coupling the turbine unit directly to the pump or generator without any means for changing the rotational velocity between the turbine unit and generator or pump. The turbine may employ blades of symmetrical aerofoil section set at right angles to the axis of rotation (sometimes known as "Wells" turbine) so that it continues to rotate in the same direction when fluid passes through in one direction as it leaves, or in the opposite direction, as it re-enters the container or chamber.

Other forms of turbine are known which have the same property of unidirectional rotation in reversing flows and which are also suitable.

With the known arrangement, the liquid is introduced into the chamber or container to cause the expulsion of fluid therefrom and then it is allowed to leave the chamber or container to cause induction of fluid into the chamber, but the design of chamber is such that the liquid in effect reaches a static condition, and this does not make for the best hydraulic productions.

With the present invention, there is also involved a chamber or container into which liquid flows to cause expulsion of fluid therefrom, and the liquid furthermore is allowed to leave the chamber or container to cause induction of fluid into the chamber, and movement of fluid is utilised for example for the driving of the prime mover, but in the present invention better hydraulic efficiency is achieved by a particular method of introducing the liquid into the chamber or container and its removal therefrom.

In accordance with the present invention, the liquid is caused to flow into the chamber in a generally tangential manner so that the liquid will swirl in the chamber, and the outflow of liquid from the chamber again is generally tangential, hydraulic efficiency being achieved in that the outflow of liquid from the chamber is enhanced by arranging the outlet in the path or swirl of the liquid in the chamber whereby the swirling momentum assists in the flow of liquid from the chamber.

In a preferred arrangement, there are two chambers arranged on opposite sides of a duct or channel through which the liquid flows, and a valving arrangement which cooperates with the duct or channel diverts the flow in the liquid tangentially into one chamber whilst blocking flow into the other chamber, but at the same time allowing flow out of the other chamber so that the two chambers in fact can work antiphase. That is to say one chamber will be filling with liquid while the other is emptying so that the fluid will be being displaced from one chamber whilst it is being induced into the other chamber. In fact the two chambers merely are connected so that the fluid from one is displaced into the other and vice versa through a common passage, and in that common passage there may be provided a turbine device which is driven by the moving fluid, and it is driven in the same direction regardless of the direction in which the fluid passes over the turbine device.

The particular embodiment of the apparatus referred to above operates therefore in a manner similar to an electronic flipflop circuit with the switching over of the valving arrangement between the positions.

Typically, the valve may comprise a vane which is positioned at a first angle to cause the fluid flowing in an upstream position in the duct to enter one of the chambers, and the fluid from the other chamber to flow into the duct at a downstream position. When the valve position is switched, the opposite takes place in that the flow of liquid from the upstream portion of the duct passes into the other chamber for the filling of same whilst the liquid flows out of the first mentioned chamber.

The chambers preferably are designed so as to be generally circular or approximately circular in cross section so as to enhance the swirling of the liquid therein.

An extremely simple and efficient energy conversion system is provided by the present invention, and the operation of the system and its construction can be enhanced and simplified if the system is closed, and operates on a syphon principle. In this case the apparatus is located above the normal level of the flowing liquid, and by syphon action the liquid will be raised up into the inflowing portion of the duct and will flow into and out of the chambers alternately and out of the downstream portion of the duct and again downwardly into the flow.

Although it is preferred to use a turbine which will be driven in the same direction regardless of the direction in which the fluid passes over same, a more conventional turbine can be used in which in order to drive same the fluid must pass over the turbine always in the same direction. When such a more conventinal turbine is used, a suitable arrangement of passages and valves may be used so that fluid leaving and re-entering the or each container passes through the turbine unit in the same direction.

It may be desirable in some circumstances that the liquid in the or each container or chamber should be separated from the fluid passing through the turbine unit in order that damp or liquid-carrying fluid may not damage the turbine unit or any electrical generator, hydraulic pump or mechanical drive attached to it. This may be done by having a free float or piston which rises on the liquid surface in the or each container.

By another method, a layer of buoyant spheres or granules floating on the surface may be used to separate the fluid from the liquid.

Alternatively, a flexible diaphragm may be used, which is displaced by liquid entering the or each container or chamber. In another arrangement, the or each container or chamber into which liquid is passed may enclose a bag or flexible container containing fluid which is expelled from the bag or container by liquid entering into the outer container or chamber. The diaphragm may cover cavities or sub-chambers within the main chamber.

The turbine unit may be used to drive an electrical generator, low-pressure or high-pressure hydraulic pump or mechanical drive.

Where in the foregoing description we refer to turbine unit as singular the arrangement may also include plurality of rotors mounted on a common shaft or plurality of passageways in parallel.

Embodiments of the present invention will now be described by way of example, with reference to the accompanying drawings, wherein:-

Fig. 1 is a diagrammatic plan view of an apparatus according to the invention;

Fig. 2 is a sectional elevation of the apparatus of Fig. 1, the section being taken on the line A - A of Fig. 1;

Figs. 3 and 4 are views similar to Figs. 1 and 2 which show another embodiment of the invention;

Figs. 5 and 6 are views similar to Figs. 1 and 2 but show yet another embodiment of the invention; and

Fig. 7 shows how any one of the embodiments of the invention can be arranged in a syphonic configuration.

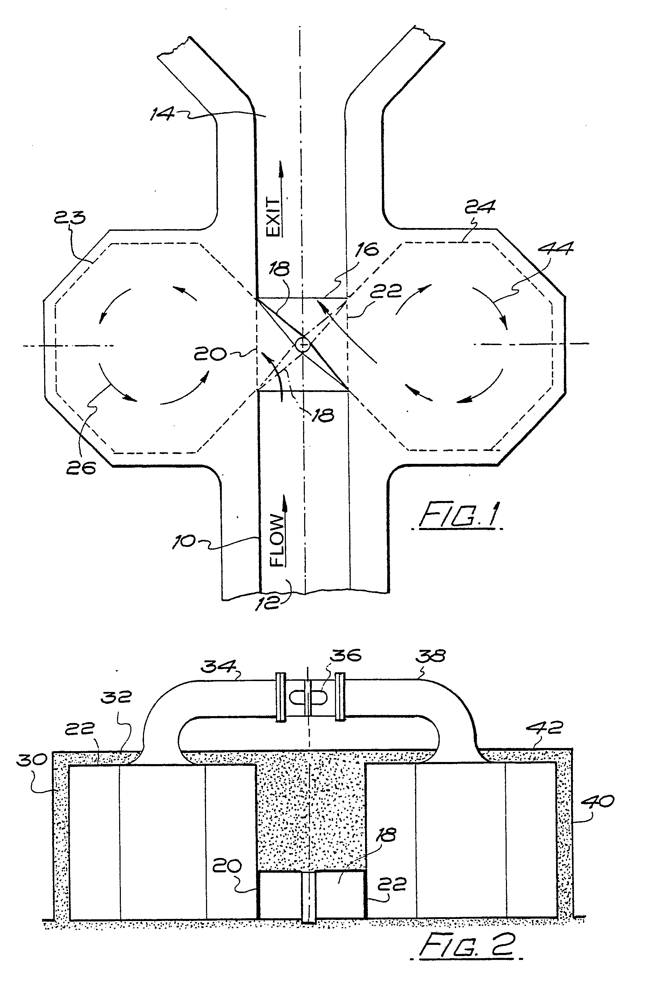

Referring to the drawings, and firstly to Figs. 1 and 2, a liquid flows in a channel 10 from an upstream end 12 to a downstream end 14. The water may typically be flowing under low head, and may be the flow in a natural water course such as a river or in a man-made channel or an outflow from a naturally occuring or impounded body of liquid, and the flow may be tidal. The channel will normally be an open channel, but it could be a closed channel i.e. a closed pipe, but in any case there will be sufficient head between the upstream end 12 and the downstream end 14 for the functioning of the apparatus to be described.

In region 16 in the channel there is provided a diverting vane 18 to opposite sides of which there are openings 20 and 22 in the channel sides leading in fact to octagonal cross sectioned chambers 23 and 24. The vane 18 is positionable between two positions controlling the flow of the liquid into and out of the chambers 23 and 24, and in the position of the vane shown in Fig. 1, the liquid flow from upstream end 12 is diverted substantially tangentially by the vane 18 through the opening 20 and into the chamber 23, so that the chamber not only fills with the liquid, but the liquid is maintained in the chamber in a swirling motion as indicated by arrows 26. As the chamber fills so it displaces a fluid above the water level out of the chamber, and in this connection reference is made to Fig. 2 wherein it will be seen that the chamber is closed by means of encircling walls 30 and an upper wall 32. From the upper wall 32 leads an outlet duct 34 containing a turbine unit 36. From the other side of the turbine unit 36 is a further duct 38 which leads into the top of the chamber 24 which similar to chamber 23 is bounded by walls 40 and 42. As the water level in chamber 23 rises when the apparatus is in the condition shown in Fig. 1, the fluid above the water level, in particular air is displaced along the duct 34 over the turbine 36 to drive same whereby shaft power is obtained, and the exhausted air passes through duct 38 into chamber 24.

In fact, in chamber 24 the liquid will also be in swirling action as indicated by arrows 44, the swirling being in the opposite direction of rotation from swirling 26 so that with the vane positioned as shown in Fig. 1, the swirling water in chamber 24 flows out of outlet 22 by its swirling momentum thereby leading to maximum hydraulic efficiency as the swirling water will have a natural tendency to flow out of opening 22 when the vane is in the position shown.

Thereby, an extremely efficient hydraulic arrangement is provided and energy can be extracted via the turbine 36. This can be converted to electrical energy for example by appropriate coupling of the turbine to an electrical generator.

When the vane 18 is reversed in position and is placed in the position shown in dotted lines in Fig. 1 (this will be done when the level of the water in chamber 23 has reached a predetermined height and may be done by automatic control means) the reverse operation takes place. The inflowing water in upstream end 12 of duct 10 is diverted smoothly and tangentially into chamber 24 maintaining the swirling momentum 44 of the liquid therein and the liquid level starts to rise displacing fluid above the liquid level through duct 38 over turbine 36 and through duct 34 back to chamber 23. At the same time, the swirling water in chamber 23 will flow smoothly out of opening 20 and into the downstream end of the duct 14 again with maximum hydraulic efficiency, because the natural swirl of the water in chamber 23 will allow it to flow smoothly out of opening 20.

A highly effective and dynamic energy extraction system is therefore provided. In fact the chambers 23 and 24 act like anti-phase pumps displacing air back and forth along the ducts 34 and 38. The turbine 36 will be of the type referred to herein whereby the turbine will be driven in the same direction regardless of the direction of flow between ducts 34 and 38.

Because of the hydraulic efficiency improvement using the swirling liquid, there is less noise and an increase in efficiency. Also, there is more or less continuous flow in the channel 10 despite the fact that the water is being displaced into one or other of the chambers 24, because at the same time the emptying chamber is discharging the water directly into the downstream end 14 of the duct 10. There is in particular minimised exit and entry losses in the flowing liquid at the inlet and outlet openings 20 and 22.

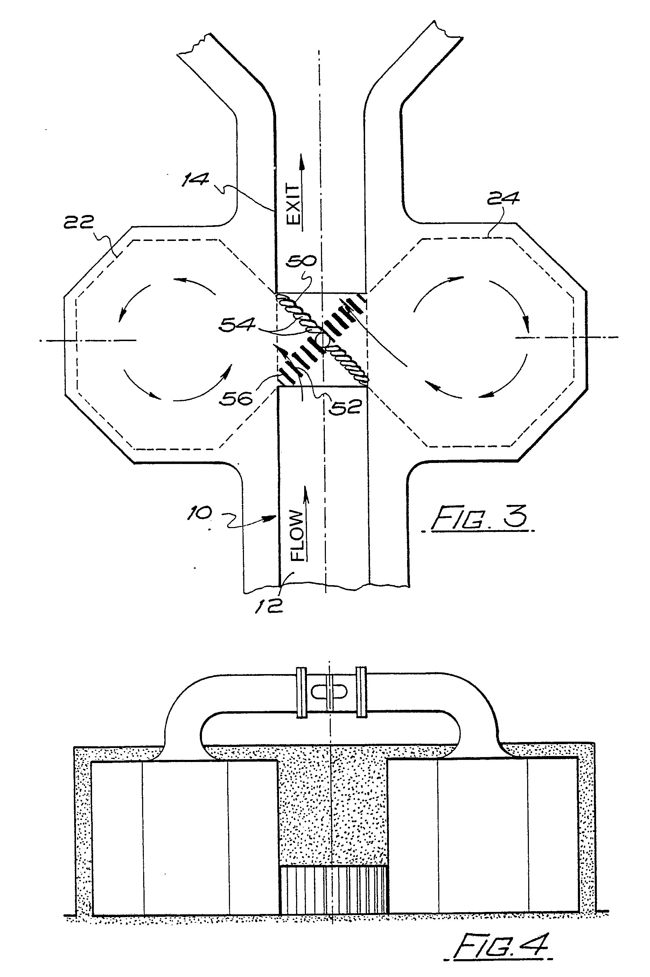

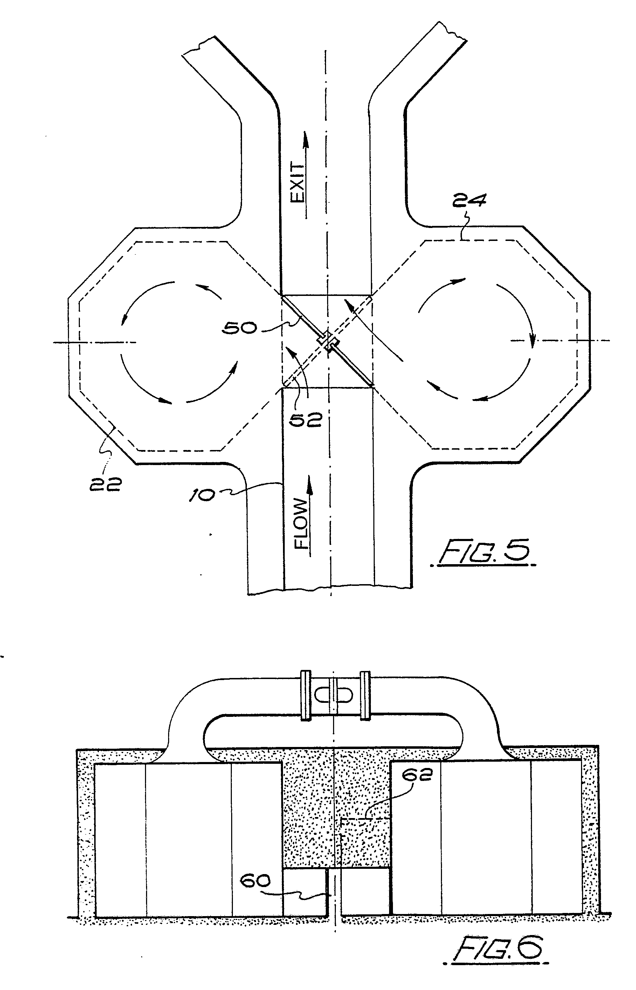

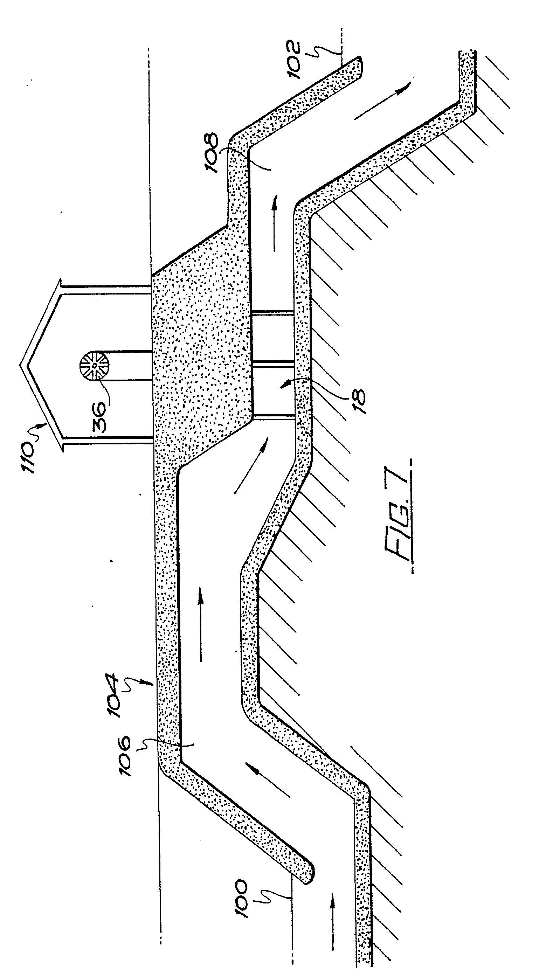

The arrangements of Figs. 3 and 4 and 5 and 6 respectively operate in the identical manner to the embodiment of Figs. 1 and 2 except that alternative forms of control devices for diverting the liquid are provided. In the arrangement of Figs. 3 and 4, along the diametral lines 50 and 52 representing the two positions which vane 18 of Fig. 1 takes up, there are small pivotal, spaced vanes 54 and 56. To switch the system from one position to another, the vanes along one line say 54 are closed whilst the vanes 56 along the other line are open and as can be seen clearly in Fig. 3 this position is shown which ensures that the liquid flowing in the channel from the upstream will be diverted into chamber 23 whilst the liquid in chamber 24 will be discharged to the downstream end 14 of the channel 10. By switching the small vanes 54 so that vanes 54 are open, and vanes 56 are closed, the flows can be altered, with the same result. In the arrangement of Figs. 5 and 6, the control is achieved by sluice valve panels which can be raised and lowered. These panels are in fixed planes again on the lines 50 and 52. In the configuration shown in Fig. 5, sluice valves are lowered along line 50 whilst those disposed along 52 are raised, allowing the liquid to flow from the channel 10 from the upstream end into chamber 23 whilst the liquid in chamber 24 is discharged back into the channel 10. When it is required to reverse the flow the sluice valves on line 50 are raised, and those on line 52 are lowered. There may be a central post 60 with guides therein for supporting the inner edges of the sluice valves. One of the sluice valves is indicated for example by reference 62 in Fig. 6. These valves may be mounted and controlled in any suitable fashion. By means of the embodiments of the invention, continuous power extraction in a simple and effective manner can take place.

By the arrangement of Fig. 7, even further improvements can be made because with the arrangement of Fig. 7 the equipment is designed to be enhanced by the use of a syphonic effect.

Referring to Fig. 7, the upstream level of the liquid in channel 10 is indicated by reference 100, and the downstream level by reference 102. The structure 104 containing the chambers and the switching valve arrangement 18 is in fact raised above these levels so as to define an upstream infeed channel 106 which is of inverted U-shape as shown, and a downstream outfeed channel 108 which leads back to the outflow water level 102. The effect of designing the housing in this way means that the water from the upstream level 100 will be drawn up by syphonic effect into the channel portion 106 and will then flow to the valving arrangement 18, and into and out of the chambers as described and eventually back into the outflow section 108. Fig. 7 shows a turbine housing 110 housing the turbine 36, and it will be understood that this arrangement works in identical fashion to each of the arrangements already described.

A particular advantage of using the syphonic mounting arrangement is that there is a saving on the amount of excavation which has to be done in order to install and construct the installation. It is not necessary to provide for any emergency gates or stop logs as are required when the installation is simply made at the stream level. The arrangement of Fig. 7 also allows safer and easier access for maintenance.

**Claims**

1. A method of converting the energy in a stream of moving liquid comprising the steps of causing the flowing liquid to flow substantially tangentially into a chamber so that the liquid swirls in the chamber and at least partially fills same, displacing a power generating fluid in the chamber above the liquid;
causing the inflow of liquid into the chamber and causing the liquid to flow substantially tangentially out of the chamber so that the power generating fluid is drawn back into the chamber; and
using the displacement of said power generating fluid to cause driving of a prime mover to provide energy in a more readily useable form.

2. A method according to claim 1, wherein the said power generating fluid comprises air and said prime mover is an air turbine.

3. A method according to Claim 1 or 2 wherein there are two of said chambers arranged on opposite sides of the stream of merging liquid and the flow of liquid is controlled by a control means which whilst causing the liquid to flow substantially tangentially into one of the chambers ceases flow of the liquid into the other chamber and causes liquid in the other chamber to flow substantially tangentially out of same.

4. A method according to Claim 3, including the step of operating the control means to cause the chambers to fill and empty in anti-phase arrangement, and wherein the power generating fluid displaced from the filling chamber is passed through a duct and into the emptying other chamber and the duct includes a turbine of the type which rotates in the same direction regardless of the direction in which the driving fluid passes over the same.

5. A method according to any preceding claims, wherein the stream of liquid passes into and through a syphon passage, the said chamber or chambers being connected to said passage to receive the liquid therefrom and to return the liquid thereto.

6. A method according to any preceding claim, wherein the prime mover is drivingly connected to an electrical generator for the driving of same to provide output electrical energy from the flow of liquid.

7. A method according to any preceding claim wherein the liquid is water and the stream is a watercourse such as a river either travelling in its natural course or in a man made channel.

8. A method of converting the energy in a stream of moving liquid substantially as hereinbefore described with reference to the accompanying drawings.

9. An installation for the conversion of the energy in a stream of moving liquid comprising:-
means controlling the flow of moving liquid so that the stream of moving liquid can be diverted so as to flow substantially tangentially into the chamber so as to swirl therein as the liquid level in the chamber increases;
means controlling the flow of moving liquid so that the diversion of the stream of moving liquid into the chamber can be terminated;
means controlling the outflow of liquid from the chamber so that the swirling liquid can flow substantially tangentially from the chamber in the direction of swirling whereby outflow from the chamber is enhanced and the chamber empties;
and including a prime mover which is driven as a result of the displacement from and induction into the chamber as a result of the filling and emptying of the said chamber of a power generating fluid.

10. An installation according to Claim 1, wherein said means controlling comprises a single pivotal deflected vane which in one position diverts the flowing stream into the chamber and in another position prevents the stream from flowing into the chamber but allows the liquid to flow from said chamber.

11. An installation according to Claim 9, wherein said means controlling comprises a first row of overlapping vanes lying in a first vertical plane and a second row of overlapping vanes lying in a second vertical plane at right angles to the first plane and both planes intersecting the stream of moving liquid, the first vanes being positionable to overlap to form a diverting plate diverting the liquid into the chamber through the spaces between the second vanes, whilst in a second position the first vanes are opened whilst the second vanes are overlapped to form a blocking plate preventing the liquid from entering the chamber allowing the liquid to flow from the chamber through spaces between the open first vanes.

12. An installation according to claim 9, wherein the means controlling comprises first and second sluice plates lying in vertical intersecting planes which also intersect the stream of flowing liquid, said sluice plates being capable of being raised or lowered selectively so that in one position first plate is lowered whilst the second plate is raised and the liquid is diverted from the stream into the chamber by the first plate whilst in another position the first plate is raised and the second plate is lowered blocking liquid from entering the chamber and allowing the liquid to flow from the chamber.

13. An installation according to any of claims 10 to 12, wherein said means controlling includes means for moving the means controlling between said positions alternatively so that the liquid level in the chamber rises and falls cyclically.

14. An installation according to claim 13, wherein there are two of said chambers and they are coupled to the same control means so that as one chamber is emptying the other is filling and vice versa, and there is a duct connecting the tops of the chambers in which there is contained a turbine which is driven in the same direction regardless of the direction of flow of the driving fluid thereover, said duct defining a means enabling the power generating fluid to be displaced from one chamber through the duct to the other chamber and vice versa as the respective chambers fill and empty.

15. An installation according to any of Claims 9 to 14, including a syphon duct structure located above the normal level of the stream, said chamber or chambers being coupled to the said syphon duct structure.

_FIG.1_

_FIG.2_

_FIG. 3_

_FIG.4_

_FIG.5_

_FIG.6_

FIG. 7

EP 0 339 246 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 098 081 (WOODMAN) <br> * Column 2, lines 26-58 * <br> --- | 1,2,4,6 ,8,9,13 | F 03 B 17/06 <br> F 03 B 13/24 <br> F 03 B 13/26 |
| A | FR-A-2 604 487 (THOMAS) <br> * Page 2, lines 20-40; page 3, lines 18-29 * <br> --- | 1,3,6,7 ,9 | |
| A | US-A-4 288 985 (DYCK) <br> * Abstract * <br> --- | 5,15 | |
| A | US-A-1 342 682 (KNOWLTON) <br> * Page 1, line 64 - page 3, line 81 * <br> --- | 1-4,6,9 ,12,13 | |
| A,D | GB-A-2 143 284 (PEATFIELD) <br> * Page 1, line 124 - page 2, line 51 * <br> --- | 1,2,4,6 -9,13 | |
| A | EP-A-0 117 739 (AUR HYDROPOWER) <br> * Page 7, line 16 - page 9, line 13; figures 5-7 * <br> ----- | 1,3,4,9 ,10,13, 14 | |

**TECHNICAL FIELDS SEARCHED (Int. Cl.4)**

F 03 B

The present search report has been drawn up for all claims

| Place of search | Date of completion of the search | Examiner |
|---|---|---|
| THE HAGUE | 24-07-1989 | DE WINTER P.E.F. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................
& : member of the same patent family, corresponding
   document

EPO FORM 1503 03.82 (P0401)